# EUROPEAN PATENT SPECIFICATION

(11) **EP 4 232 730 B1**
(45) Date of publication and mention of the grant of the patent: **04.12.2024**
(21) Application number: 21815253.6
(22) Date of filing: 25.10.2021
(51) Int. Cl.: F16L 1/18, B21C 37/15, B23K 1/00, F16L 1/20, F16L 9/18, F16L 39/00

(54) **FABRICATING PIPE-IN-PIPE (PIP) PIPELINES**
HERSTELLUNG VON ROHR-IN-ROHR (PIP)-ROHRLEITUNGEN
FABRICATION DE PIPELINES DE TYPE TUYAU-DANS-TUYAU

(30) Priority: 26.10.2020 GB 202016982
(43) Date of publication of application: 30.08.2023
(73) Proprietor: Subsea 7 Limited, Sutton, Surrey SM2 5BN (GB)
(72) Inventor: MARSTON, Jack William, Aberdeenshire AB51 6AJ (GB); MCTERNAN, Briony Anne Louise, Aberdeenshire AB51 6BL (GB); GRIEVE, William Alexander, Alford AB33 8QJ (GB); SMITH, Greg, Oldmeldrum, Aberdeenshire AB51 0PJ (GB)
(74) Representative: Keltie LLP
(86) International application number: PCT/GB2021/052771
(87) International publication number: WO 2022/090697

(56) References cited:
- WO-A1-2014/190156
- GB-A- 2 455 150
- US-A- 4 061 231
- US-A- 4 910 374

## Description

This invention relates to the manufacture of pipe-in-pipe (PiP) pipelines as used in the subsea oil and gas industry. The invention relates particularly to the challenges of fabricating such pipelines from a succession of pipe joints during S-lay operations.

Pipelines are used underwater as 'tie-backs' to transport crude oil and/or natural gas from a subsea wellhead across the seabed on the way to the surface, typically via a riser. Specifically, on production of hydrocarbons from a subsea well, the produced fluid emerges from the wellhead at high temperature and pressure and then enters a subsea pipeline. During subsequent transportation along the pipeline, the temperature and pressure of the produced fluid have to be kept high enough to ensure a sufficient flow rate across the seabed and up the riser. Various measures are therefore taken to ensure that the internal temperature of the pipeline remains high despite thermal exchange with the much colder surrounding seawater.

PiP assemblies are often used as subsea pipelines in view of their thermally-insulating structure. A PiP pipeline comprises a fluid-carrying inner pipe positioned concentrically within an outer pipe. The inner and outer pipes are spaced from each other to define a thermally-insulating annulus between them. Typically, thermally insulating material is disposed in the annulus; it is also possible to draw down a partial vacuum in the annulus or to inject an insulating gas to reduce transmission of heat through the annulus.

Two main types of PiP assemblies are known, namely sliding and non-sliding arrangements.

In sliding PiP arrangements, the inner pipe is free to slide longitudinally within the outer pipe along most or substantially all of its length, eventually being restrained only at the ends of the pipeline. In that case, the inner pipe is supported within the outer pipe by longitudinally-distributed spacers or centralisers that extend radially across the annulus and that permit sliding movement of the inner pipe relative to the outer pipe.

Conversely, in non-sliding PiP arrangements, the inner pipe is restrained at much shorter longitudinal intervals between the ends of the pipeline. For example, the ends of the outer pipe may be swaged to close the annulus every two pipe joints, this being at 24m intervals given that a standard pipe joint is 12m in length.

Non-sliding PiP pipelines are relatively easy to manufacture because short sections of pipe can simply be welded together. However, they cannot easily accommodate variations of length caused by thermal expansion or bending during installation and in use. Sliding PiP pipelines are therefore preferred where thermal expansion of the inner pipe relative to the outer pipe cannot be neglected, for example in deep-water oil production.

An example of an S-lay vessel is shown in US 3901043. The firing line of such a vessel is narrow, congested and busy during pipelaying operations, noting that multiple pipeline assembly steps must be performed over a short distance within a limited time. Conventionally, the firing line comprises a longitudinal succession of workstations, for example for welding, testing and coating the pipeline. Different assembly steps are performed simultaneously at different workstations. The pipeline is advanced through the workstations in stepwise fashion as the respective assembly steps are completed.

Movement of the pipeline along the firing line is controlled by tensioners at the downstream end of the firing line, most commonly continuous-track tensioners as shown in US 3668878. The tensioners also support the weight of the pipeline catenary that is suspended between the vessel and the seabed.

The pipeline and its constituent pipe joints are typically supported on the firing line by roller boxes as shown in WO 96/08605, Support systems with mobile carriages are also known, for example as shown in US 3608321, but that option limits the number of workstations; static work stations are therefore preferred.

Assembling a PiP pipeline aboard an S-lay vessel can be very difficult in such a confined space. In this respect, the inner pipe has to be able to slide relative to the outer pipe in order to weld together adjoining inner pipes before welding together the surrounding outer pipes. This adds extra handling operations.

Roller boxes are used for displacing the inner pipe and the outer pipe during their passage through the successive workstations. An improved roller box is disclosed in WO 2015/145376, in which clamps are added to guide the pipeline laterally. More generally, various clamps are known in the art. Spacer systems that double as retainers are also known in the art.

GB 2455150 discloses retaining means for a pipe stalk which prevents axial movement of an inner pipe with respect to an outer pipe, when in a first configuration, and enables the outer pipe to move freely axially with respect to the inner pipe in a second configuration. The retaining means comprises first and second abutment stops, provided on the inner surface of the outer pipe and the outer surface of the inner pipe, respectively. A rotatable key member is located between the first and second abutment stops; by rotating the key member such that it extends between the two abutment stops, axial movement between the inner and outer pipes is prevented.

US 4061231 provides apparatus for supporting pipes as they are moved to prevent rolling, dragging or dropping of the pipes, which may damage any coating present on the pipes. Hydraulically driven pivotal lifters lift the pipe and deposit in on a rack. US 4910374 discloses a welding complex in which pipe sections are supported and rotated to be brought into alignment with a pipeline so that a weld between the section and parent pipeline can be made.

WO 2014/190156 relates to a system for alignment and internal welding of pipe sections. An external alignment mechanism comprises rollers that allow longitudinal movement of the pipe sections. The rollers may also allow rotation of the pipes around the longitudinal axis and translational movement of the pipe sections. A welding mechanism may include a laser to track the profile of the weld.

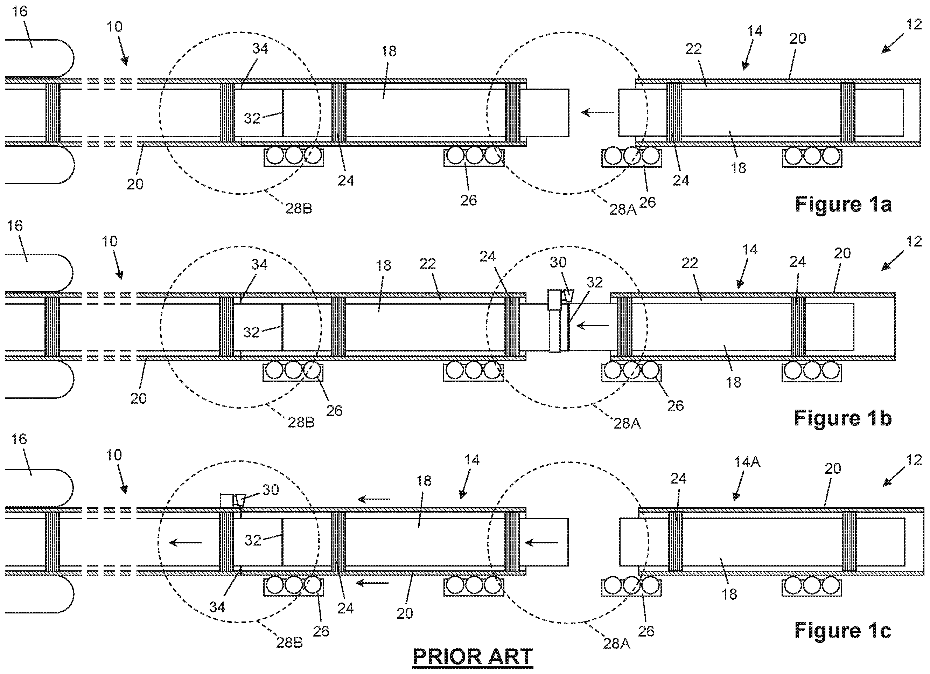

Figures 1a to 1c of the accompanying drawings illustrate a conventional method for assembling a sliding PiP pipeline 10 on the firing line 12 of an S-lay vessel. In the drawings, the pipeline 10 is assembled and launched from right to left as the vessel advances from left to right. Thus, a PiP pipe joint 14 shown on the right of the drawings is added to the upper, trailing end of the pipeline 10 and a catenary of the assembled pipeline 10 is gripped by, and suspended from, tensioners 16 shown on the left of the drawings.

Each pipe joint 14 comprises an inner pipe 18 disposed concentrically within an outer pipe 20. The radial spacing between the inner and outer pipes 18, 20 defines an annulus 22 between them. The inner pipe 18 is slidably supported within the outer pipe 20 by longitudinally-spaced spacers 24 that extend radially across, and circumferentially around, the annulus 22.

Typically, the pipe joints 14 are single or double joints, hence being 12m or 24m in length, but they are shown greatly shortened in the drawings for ease of illustration. Similarly, thermal insulation that could be disposed in the annulus 22 is omitted from these simplified schematic views.

Figure 1a shows a pipe joint 14 supported by a longitudinal array of roller boxes 26 and approaching the upper end of the pipeline 10, which is also supported by roller boxes 26 of the array and is held stationary at an upstream workstation 28A by the tensioners 16. It will be noted that the inner pipe 18 of the pipeline 10 has been displaced relative to the outer pipe 20 of the pipeline 10 in the upstream direction to protrude from the upper end of the outer pipe 20. Thus, the upper ends of the inner and outer pipes 18, 20 are staggered longitudinally to provide access to the upper end of the inner pipe 18 for welding.

Similarly, the inner and outer pipes 18, 20 of the pipe joint 14 are also staggered longitudinally but in mirror relation. Thus, the inner pipe 18 has been displaced relative to the outer pipe 20 of the pipe joint 14 in the downstream direction to provide access to the downstream end of the inner pipe 18 for welding.

The inner and outer pipes 18, 20 of the pipeline 10 and the pipe joint 14 are coaxially aligned with their counterparts in mutual opposition. In each case, the spacers 24 hold the inner pipes 18 in concentric relation with the outer pipes 20. Thus, the outer pipes 20 are supported by the roller boxes 26 and the inner pipes 18 are supported by the outer pipes 20 via the spacers 24.

When the inner pipes 18 of the pipeline 10 and the pipe joint 14 are brought together in mutual abutment at the upstream workstation 28A as shown in Figure 1b, a welding apparatus 30 is fitted to one of the inner pipes 18 to form a circumferential butt weld 32 between them. Next, the welding apparatus 30 is removed from the inner pipe 18 and the tensioners 16 are activated to advance the pipeline 10 and the pipe joint 14 together until the trailing end of the outer pipe 20 of the pipeline 10 reaches a downstream workstation 28B. There, the outer pipe 20 of the pipe joint 14 is advanced in the downstream direction into mutual abutment with the outer pipe 20 of the pipeline 10 as shown in Figure 1c. A welding apparatus 30 is shown fitted to one of the outer pipes 20 at the downstream workstation 28B to form a circumferential butt weld 34 between them.

With the pipe joint 14 thus added to the trailing end of the pipeline 10, the tensioners 16 can then advance the pipeline 10 relative to the vessel and the firing line 12 in the downstream direction, from right to left as illustrated, as the vessel advances in the upstream direction, from left to right as illustrated. The process can then be repeated with an additional pipe joint 14A to extend the pipeline 10 in stepwise fashion.

It will be apparent that the welds 32, 34 between the inner pipes 18 and the outer pipes 20 have to be performed in sequence at the workstations 28A, 28B. Thus, preparations for the weld 34 between the outer pipes 20 can only begin when the weld 32 between the inner pipes 18 has already been completed and the pipeline 10 has been advanced from the upstream workstation 28A to the downstream workstation 28B. This prolongs the fabrication process.

For simplicity, Figures 1a to 1c focus upon the welding steps of pipeline fabrication but they omit the subsequent steps of testing the welds and coating the resulting field joints. The skilled reader will appreciate that performing these subsequent steps will further lengthen the fabrication process and will further complicate pipe handling.

Against this background, the invention resides in a method of assembling a pipe-in-pipe pipeline by adding a succession of inner and outer pipe sections to a trailing end of the partially-completed pipeline. The method is particularly apt to be performed aboard a pipelaying vessel during an S-lay operation. The method comprises: welding a leading end of a first inner pipe section to a trailing end of an inner pipe of the partially-completed pipeline; advancing a leading end of a second inner pipe section to a trailing end of the first inner pipe section; advancing an outer pipe section downstream from the second inner pipe section along and around the first inner pipe section and into abutment with a trailing end of an outer pipe of the partially-completed pipeline; and welding a leading end of the outer pipe section to the trailing end of the outer pipe. The outer pipe section may be advanced along at least a full length of the first inner pipe section, hence being advanced to a distance at least the full length of the outer pipe section.

Preferably, the leading end of the second inner pipe section is welded to the trailing end of the first inner pipe section before advancing the outer pipe section onto the first inner pipe section. Attachment of the first inner pipe section to the inner pipe of the partially-completed pipeline and to the second inner pipe section may be performed in simultaneous or chronologically overlapping welding operations. Conveniently, the outer pipe section and the second inner pipe section may be provided in concentric relation as a pipe-in-pipe pipe joint.

The outer pipe section may be welded to the outer pipe at a downstream workstation; and the second inner pipe section may be welded to the first inner pipe section at an upstream workstation. The first inner pipe section may be welded to the inner pipe at an intermediate workstation.

Advantageously, the advancing pipe sections may be supported centred on a longitudinal axis in common with that of the trailing end of the partially-completed pipeline. This may be achieved by deploying a secondary support system to support the first inner pipe section centred on that common axis while advancing and welding the first inner pipe section to the inner pipe. Thus, the first inner pipe section may be advanced when unsupported by the outer pipe section. The secondary support system may then be retracted before advancing the outer pipe section, supported by a primary support system, around the first inner pipe section.

The use of a secondary support system may also be expressed, within the inventive concept, as a method of assembling a pipe-in-pipe pipeline by adding inner and outer pipe sections to a trailing end of the partially-completed pipeline. That method comprises: using a primary support system to support an outer pipe section centred on a longitudinal axis in common with the trailing end of the partially-completed pipeline; deploying a secondary support system to support a first inner pipe section centred on that axis; while supported by the deployed secondary support system, advancing and welding the first inner pipe section to an inner pipe of the partially-completed pipeline; retracting the secondary support system; and while supported by the primary support system, advancing the outer pipe section around the first inner pipe section and welding the outer pipe section to an outer pipe of the partially-completed pipeline.

After the secondary support system has been retracted, the outer pipe section preferably supports the first inner pipe section centred on the common axis. For example, the outer pipe section may support the first inner pipe section via at least one spacer in an annulus between those pipe sections. The, or each, spacer may be mounted to the first inner pipe section before advancing the outer pipe section over the or each spacer. Alternatively, the outer pipe section may be advanced as the, or each, spacer, disposed within and moving with the outer pipe section, slides over the first inner pipe section.

The secondary support system may be redeployed behind the advanced outer pipe section to support a second inner pipe section on the deployed secondary support system, also centred on the common axis. While supported by the deployed secondary support system, the second inner pipe section may be advanced into abutment with the first inner pipe section. The outer pipe section may then be advanced from around the second inner pipe section and onto the first inner pipe section.

The primary support system may contact the outer pipe section at a first level and, when deployed, the secondary support system may contact the first inner pipe section at a second level above the first level.

Elegantly, retraction of the secondary support system away from the first inner pipe section may provide access for the outer pipe section to contact and be supported by the primary support system. For example, the secondary support system may comprise support formations such as rails that, during retraction, move apart from each other in opposed lateral directions to define a gap that accommodates the outer pipe section between them.

Advantageously, a longitudinal series of secondary support systems may be operated independently of each other for individual deployment and retraction in response to longitudinal movement of any of the pipe sections.

The inventive concept also embraces an apparatus for assembling a pipe-in-pipe pipeline, the apparatus comprising a primary support system for supporting an outer pipe section and a secondary support system for supporting an inner pipe section. The primary support system is arranged to support the outer pipe section centred on a longitudinal axis in common with a trailing end of a partially-completed pipeline. The secondary support system is deployable to support the inner pipe section also centred on that axis, to enable the inner pipe section to be advanced and welded to an inner pipe of the partially-completed pipeline. The secondary support system is retractable to advance the outer pipe section around the inner pipe section to enable the outer pipe section, when supported by the primary support system, to be welded to an outer pipe of the partially-completed pipeline.

Conveniently, the secondary support system may be mounted on the primary pipe support system, which may, for example, comprise at least one roller box or support table.

Preferably, the primary support system is configured to contact the outer pipe section at a first level and the secondary support system is configured, when deployed, to contact the first inner pipe section at a second level above the first level.

The secondary support system suitably comprises laterally-displaceable support formations such as longitudinally-extending parallel rails that, when deployed to respective inward positions, together define an axial path for guiding the advance of the inner pipe section. When the support formations are retracted in opposite lateral directions to respective outward positions, a gap between them may provide access for the outer pipe section to contact and be supported by the primary support system. The support formations may, for example, be pivotable about respective axes extending substantially parallel to the common longitudinal axis.

There could be a longitudinal series of secondary support systems, each of which is operable independently of the others for individual deployment and retraction. The primary support system may also be retractable away from the common axis to permit deployment of the secondary support system.

The inventive concept also embraces a pipelaying vessel configured for S-lay operation comprising apparatus of the invention or operating in accordance with methods of the invention.

By virtue of the invention, displaceable support bars or rails may be added to, or otherwise used in combination with, roller boxes or horizontal support tables. The roller boxes or support tables support the outer pipe of a PiP assembly for longitudinal movement along a desired central longitudinal axis. The support bars are arranged to support the inner pipe of the assembly for longitudinal movement along the same central longitudinal axis. As a result, the cycle time for adding a new pipe section or joint to the upper end of the catenary may be greatly reduced. Beneficially, two welding stations may be dedicated to inner pipe activities. With appropriate longitudinal spacing between the roller boxes or support tables and the workstations, inner pipe sections and/or outer pipe sections can be welded nearly simultaneously after the inner pipe of the first joint has been welded to the catenary.

In one practical embodiment of the invention, a PiP slide rail system allows a compact four-station welding spread to be used when fabricating and laying a PiP pipeline. This unique slide rail system overcomes problems arising from a differential in the level or height of the bottom of the pipe between the inner and outer pipes. Parallel rails support the inner pipe along the length of the main firing line with a higher centre bias, enabling the outer pipe to be sleeved telescopically over the inner pipe. This sleeving action is also unique to pipelaying and enables the aforementioned four-station welding spread. The rails and/or spacers or centralisers constantly support the inner pipe.

Embodiments of the invention provide a device for supporting the elements of a PiP assembly comprising an outer pipe and an inner pipe with smaller diameter during assembly. The device comprises: a primary pipe support system, such as a roller box or a support table, that is able to support the outer pipe; and a secondary pipe support system that is adjustable either to support the inner pipe or to be displaced outside the path of the outer pipe.

The secondary pipe support system may, for example, be mounted on the primary pipe support system. The secondary system may comprise a starboard support assembly and a port support assembly, each support assembly comprising at least one axially-oriented support rail and a mechanism for displacing the at least one support rail, so that the rails of those assemblies can together define an axial path in an inner pipe support mode.

The support rails may, for example, support the inner pipe by being pivoted inwards. The support rails may also be displaced by pivoting outwards beyond the outer pipe trajectory, allowing the outer pipe to be supported by the primary pipe support system in an outer pipe support mode.

Embodiments of the invention also provide equipment for supporting a PiP pipeline aboard a lay vessel, the equipment comprising: at least one roller box supporting the outer pipe; and at least one horizontal table axially aligned with the roller box; wherein the horizontal table comprises axially-oriented rails able to support the inner pipe where the inner pipe is not inside the outer pipe. The rails can be separated to allow the at least one roller box to support the outer pipe. The or each roller box may also comprise supporting rails.

Furthermore, embodiments of the invention implement a method for assembling a PiP pipeline aboard a pipelaying vessel performing an S-lay operation. The method comprises: (a) holding a catenary of the pipeline; (b) setting rails on support equipment for supporting and welding a first inner pipe section to the inner pipe of the pipeline catenary; (c) providing a pre-arranged PiP section comprising a second inner pipe section, an outer pipe section and spacers; (d) welding the second inner pipe section to the first inner pipe section; (e) removing the rails and (f) sliding the outer pipe section around the first inner pipe section while setting the rails for supporting the second inner pipe section; and advancing the catenary and the vessel. The method is then repeated from step (c) onwards to continue fabricating the pipeline. The inner pipe sections have a smaller diameter than the outer pipe section.

In summary, apparatus of the invention for assembling a pipe-in-pipe pipeline may comprise a primary support system, such as an array of rollers, for supporting an outer pipe section and a secondary support system, such as a set of rails, for supporting an inner pipe section. The primary support system supports the outer pipe section centred on a longitudinal axis in common with a trailing end of a partially-completed pipeline.

The secondary support system is deployed to support the inner pipe section also centred on that common axis, enabling the inner pipe section to be advanced and welded to an inner pipe of the partially-completed pipeline. The secondary support system is then retracted to provide clearance to advance the outer pipe section, supported by the primary support system, around the inner pipe section. This enables the outer pipe section to be welded to an outer pipe of the partially-completed pipeline.

To put the invention into context, reference has already been made to Figures 1a to 1c of the accompanying drawings. As noted above, those figures are a sequence of schematic side views of the firing line of an S-lay vessel when fabricating a PiP pipeline in accordance with a conventional technique.

In order that the invention may be more readily understood, reference will now be made, by way of example, to the remainder of the accompanying drawings, in which:
Figure 2 is a schematic cross-sectional view of a PiP assembly;
Figures 3a and 3b are schematic cross-sectional views that, respectively, show the outer and inner pipes of the PiP assembly of Figure 2 being supported in accordance with the invention;
Figures 4a to 4c are schematic cross-sectional views that show options for relative movement between outer and inner pipe supports and the PiP assembly of Figure 2;
Figures 5a to 5h are a sequence of schematic side views of the firing line of an S-lay vessel when fabricating a PiP pipeline in accordance with the invention;
Figures 6a and 6b are a sequence of schematic side views that show a variant of the technique shown in Figures 5a to 5h;
Figure 7 is a perspective view of an S-lay firing line apparatus of the invention;
Figure 8 is a perspective view of a roller box of the invention, being part of the firing line apparatus shown in Figure 7, when in a first operating mode configured to support the inner pipe of a PiP assembly;
Figure 9 is a top plan view of the roller box of Figure 8 when in the first operating mode;
Figure 10 is an end view of the roller box of Figure 8 when in the first operating mode;
Figure 11 is a top plan view of the roller box of Figure 8 when in a second operating mode configured to support the outer pipe of a PiP assembly; and
Figure 12 is an end view of the roller box of Figure 8 when in the second operating mode.

Where appropriate, like numerals are used for like features in the description that follows.

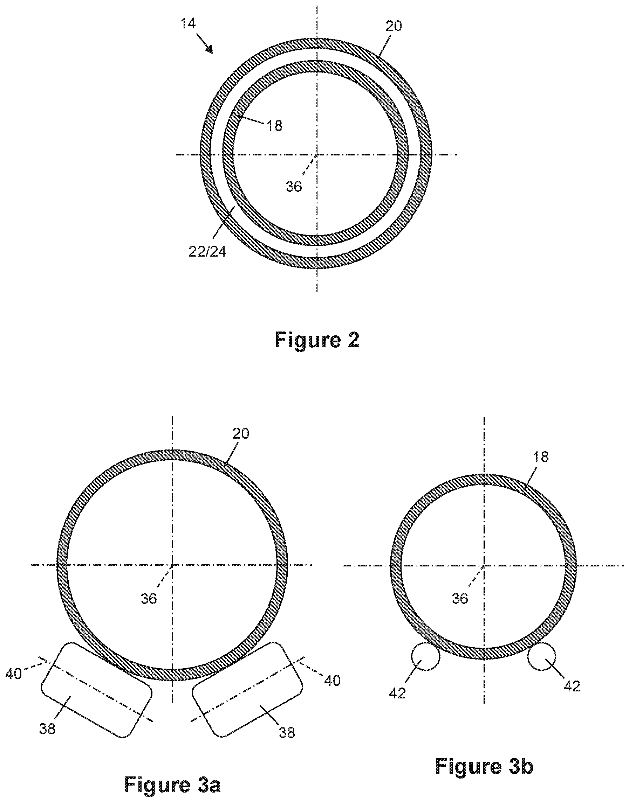

Referring firstly to Figures 2 to 4c, Figure 2 shows a pipe joint 14 comprising concentric inner and outer pipes 18, 20 of substantially the same length as each other. The inner and outer pipes 18, 20 are coaxial, being rotationally symmetrical about a common central longitudinal axis 36.

The inner pipe 18 has an external diameter that is substantially smaller than the internal diameter of the outer pipe 20. Thus, the inner and outer pipes 18, 20 are separated by an annulus 22 and, in particular, by a spacer 24 that is disposed in the annulus 22.

Figure 3a shows a primary support system comprising paired cylindrical rollers 38 that are arranged to support the outer pipe 20. A longitudinal succession of such paired rollers 38 extends along and under the outer pipe 20. The rollers 38 turn about respective axes of rotation 40 that lie in a plane orthogonal to the central longitudinal axis 36, such that there is rolling contact between the rollers 38 and the outer pipe 20 in the longitudinal direction. As is conventional, the axes 40 of the rollers 38 converge downwardly so that the oppositely-inclined rollers 38 cradle the underside of the outer pipe 20. This keeps the outer pipe 20 correctly aligned as it travels along the firing line parallel to the central longitudinal axis 36.

Figure 3b shows a secondary support system comprising paired rails 42 that are arranged to support the inner pipe 18 in accordance with the invention. The rails 42 extend parallel to each other and to the central longitudinal axis 36, such that there is sliding contact between the rails 42 and the inner pipe 20. The rails 42 are spaced apart laterally in a horizontal plane to cradle the underside of the inner pipe 18 in the gap between them. This keeps the inner pipe 18 correctly aligned as it travels along the firing line parallel to the central longitudinal axis 36.

As a comparison between Figures 3a and 3b makes clear, the rails 42 contact the inner pipe 18 at a level above the level at which the rollers 38 contact the outer pipe 20. The difference in height between those levels is sufficient for the rails 42 to support the inner pipe 18 in concentric alignment with the outer pipe 20 on their common central longitudinal axis 36, despite the much smaller external diameter of the inner pipe 18. Put another way, the closest point of the rails 42 is nearer, radially and vertically, to the central longitudinal axis 36 than the closest point of the rollers 38.

The rollers 38 may be part of a roller box or a support table. As will be explained, the rails 42 are apt to be fitted to a roller box or support table that is modified in accordance with the invention. The rails 42 could be replaced by a longitudinal array of rollers or could support such an array of rollers that effect rolling contact with, and axial alignment of, the inner pipe 18. More generally, additional rollers, rails or other guides could bear against the outside of the inner pipe 18 and/or against the outside of the outer pipe 20 to keep those pipes 18, 20 correctly aligned as they travel along the firing line parallel to the central longitudinal axis 36.

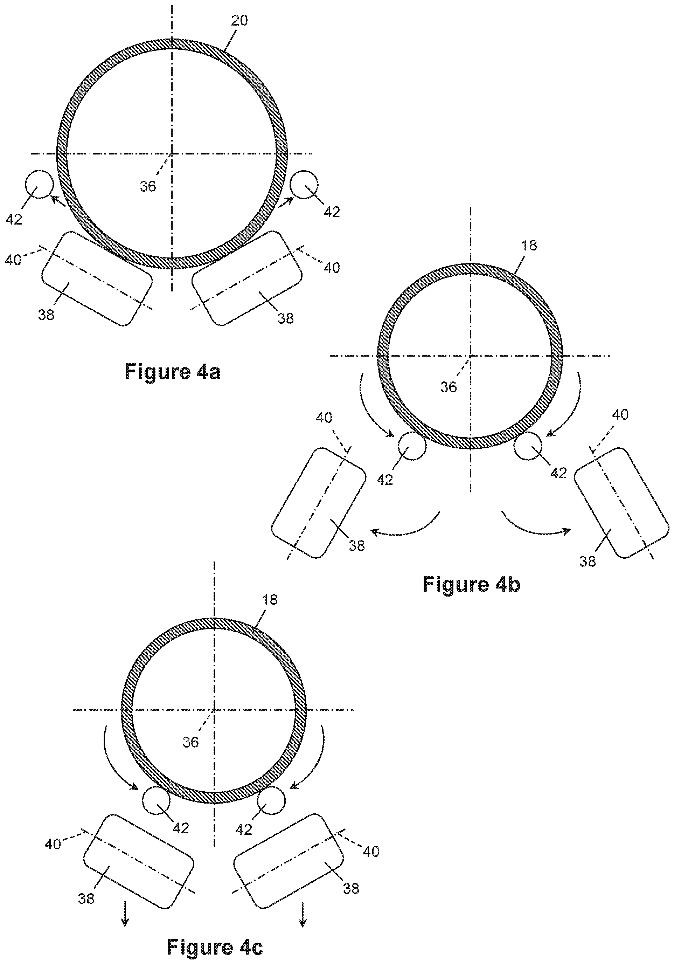

Figure 3b shows the rails 42 that exemplify the secondary support system deployed in a first operating mode in which the rails 42 are positioned to support the inner pipe 18. However, it will be apparent that the rails 42 lie within the radius of the outer pipe 20 and so have to be moved laterally out of the way to allow clearance for longitudinal movement of the outer pipe 20. In this respect, Figure 4a shows the outer pipe 20 supported by the rollers 38 in a second operating mode as also shown in Figure 3a. Here, the rails 42 have been retracted and displaced outwardly relative to the central longitudinal axis 36 to positions outside the external circumference or envelope of the outer pipe 20. Optionally, but conveniently, the retracted rails 42 are also displaced upwardly and outwardly relative to their positions in the first operating mode shown in Figure 3b.

In principle, it is possible to move the rails 42 of the secondary support system into the deployed positions of the first operating mode shown in Figure 3b without moving the rollers 38 of the primary support system relative to the central longitudinal axis 36. However, if there is insufficient clearance for this, provision can be made to retract the primary support system out of the way when deploying the secondary support system. In this respect, Figures 4b and 4c show two ways in which the rollers 38 could be retracted to allow clearance for the rails 42 to move from the retracted position shown in Figure 4a into the deployed position shown in Figure 3b.

Figure 4b shows the rollers 38 pivoted away in opposite directions from their positions in the second operating mode as shown in Figures 3a and 4a. Conveniently, each roller 38 could be mounted with a respective one of the rails 42 on a common pivotable chassis, such that swinging the roller 38 out of contact with the outer pipe 20 in the second operating mode also swings the rail 42 into contact with the inner pipe 18 in the first operating mode. The rollers 38 and the rails 42 could, for example, pivot about axes parallel to the central longitudinal axis 36.

Figure 4c shows the rollers 38 lowered away from their positions in the second operating mode as shown in Figures 3a and 4a, following a downward translational movement of both rollers 38 in unison.

Whilst Figures 3b to 4c all show the rails 42 engaging the outer contour of the inner pipe 18, the rails 42 may, in practice, bear against spacers or centralisers that are mounted on the inner pipe 18. This keeps the rails 42 clear of fragile thermal insulation material that may be wrapped around the inner pipe 18. If there is no risk of damage to thermal insulation, the rails 42 may bear directly against the inner pipe 18 when in the second operating mode. The rails 42 may also be adjustable to different radii relative to the central longitudinal axis 36 when in the second operating mode, also to cater for the presence of spacers or centralisers.

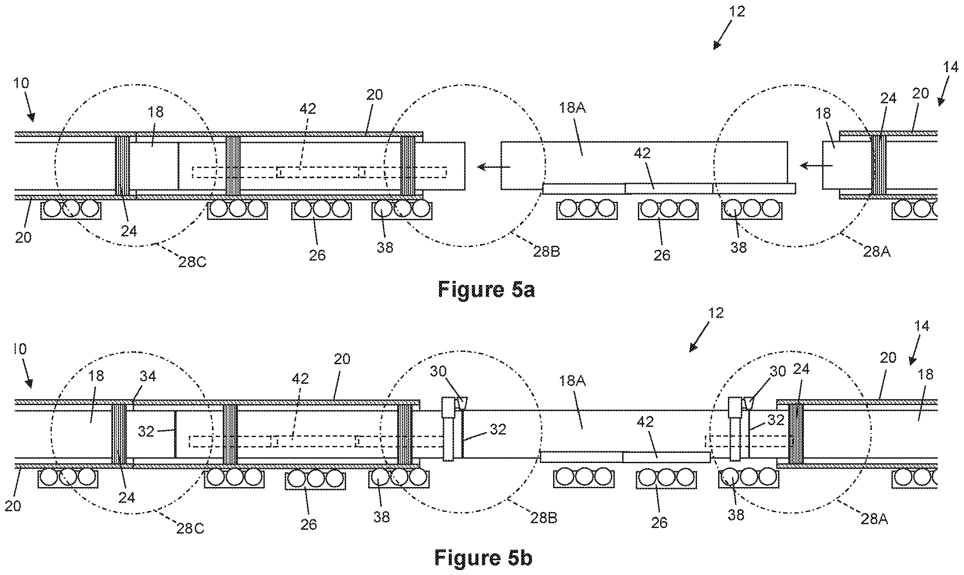

Turning next to Figures 5a to 5h, these drawings illustrate a method of the invention for assembling a sliding PiP pipeline 10 on the firing line 12 of an S-lay vessel, using a secondary support system comprising rails 42 as illustrated in Figures 3b to 4c. In this instance, the firing line 12 comprises, in downstream succession, a first workstation 28A, a second workstation 28B and a third workstation 28C. The workstations 28A, 28B, 28C are spaced longitudinally from each other by the length of a pipe joint 14, this being either 12m or 24m depending upon whether the pipe joint 14 is a single or double joint.

Again, the pipeline 10 is assembled and launched in a downstream direction from right to left as the vessel advances from left to right. Thus, a PiP pipe joint 14 shown on the right of the drawings is added to the upper, trailing end of the pipeline 10 and a catenary of the assembled pipeline 10 is shown on the left of the drawings. The catenary is gripped by, and suspended from, tensioners downstream of the location shown in Figures 5a to 5h. In this case, however, the tensioners have been omitted from these drawings.

In Figures 5a to 5h, the rails 42 are shown in solid lines when lowered and deployed in the first operating mode as shown in Figures 3b, 4b and 4c and in dashed lines when raised and retracted in the second operating mode as shown in Figure 4a.

In this example, the secondary support system exemplified by the rails 42 and the primary support system exemplified by the rollers 38 of the roller boxes 26 are structurally connected. In particular, the rails 42 are supported by, and movable relative to, the roller boxes 26. Also, when the rails 42 of neighbouring roller boxes 26 are deployed in the first operating mode, those rails 42 align and cooperate in series to form a substantially continuous track.

The rails 42 of neighbouring roller boxes 26 can be deployed and retracted independently as required. This allows deployed rails 42 of a roller box 26 to support part of an inner pipe 18 protruding from an outer pipe 20 while that outer pipe 20 is supported by the rollers 38 of a neighbouring roller box 26, whose rails 42 are retracted. When an advancing outer pipe 20 supported by the rollers 38 of one roller box 26 approaches deployed rails 42 of a neighbouring roller box 26, those rails 42 retract before collision to allow the outer pipe 20 to proceed unhindered.

Figure 5a shows a discrete intermediate inner pipe 18A supported by deployed rails 42 and being advanced downstream while approaching the upper or upstream end of the pipeline 10, which is supported by roller boxes 26 and held at the second intermediate workstation 28B. Figure 5a also shows a PiP pipe joint 14 being advanced downstream while approaching the upstream end of the intermediate inner pipe 18A.

When the downstream or leading end of the intermediate pipe section 18A has been brought into abutment with the trailing end of the inner pipe 18 of the pipeline 10 at the second workstation 28B as shown in Figure 5b, a welding apparatus 30 forms a circumferential butt weld 32 between them. In this respect, as before, the inner pipe 18 of the pipeline 10 is displaced relative to the outer pipe 20 of the pipeline 10 in the upstream direction to protrude from the upper end of the outer pipe 20. By staggering the upper ends of the inner and outer pipes 18, 20 in this way, the upper end of the inner pipe 18 is accessible for welding.

Next, with the intermediate inner pipe 18A still supported by the rails 42, the pipe joint 14 is advanced to bring the downstream or leading end of its inner pipe 18 into abutment with the upstream or trailing end of the intermediate inner pipe 18A at the first workstation 28A. A welding apparatus 30 then forms a circumferential butt weld 32 between the intermediate inner pipe 18A and the inner pipe 18 of the pipe joint 14 as also shown in Figure 5b.

In principle, it would be possible to form the welds 32 at the first and second workstations 28A, 28B simultaneously with each other and/or with the weld 34 at the third workstation 28C between successive outer pipe sections 20.

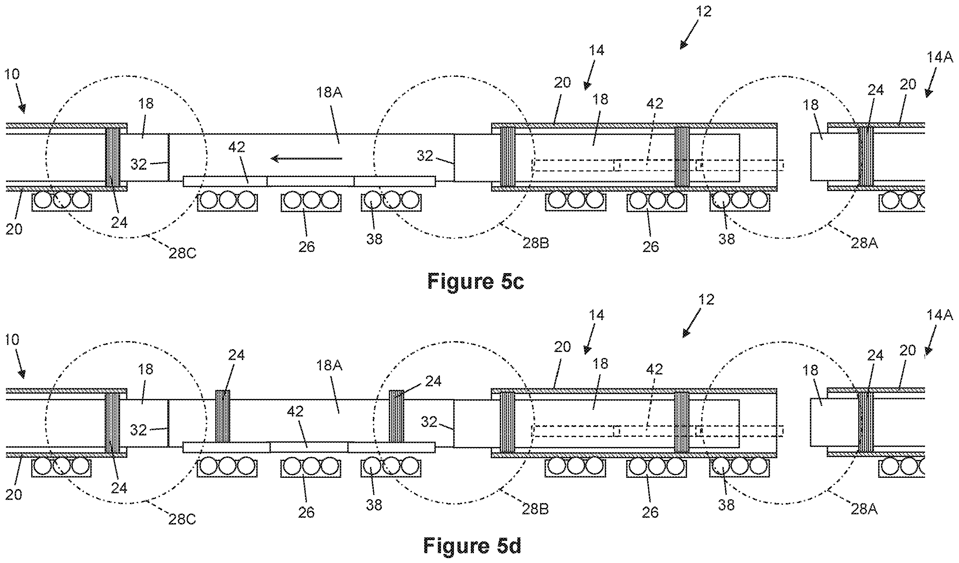

Figure 5c shows the trailing end of the pipeline 10 now advanced to the third workstation 28C, hence advancing the intermediate inner pipe 18A and the pipe joint 14 with it. The weld 32 between the trailing end of the intermediate inner pipe 18A and the leading end of the pipe joint 14 is therefore now at the second workstation 28B. An additional PiP pipe joint 14A is shown approaching the trailing end of the pipe joint 14, which is now at the first workstation 28A.

Figure 5d then shows the optional step of fixing spacers 24 around the intermediate pipe section 18A. Some of the rails 42 supporting the intermediate inner pipe 18A can be retracted, if required, to provide clearance for mounting the spacers 24. The rails 42 can then be deployed radially inwardly to the extent required to bear against the spacers 24. This step can be performed before the abovementioned steps if required; for example, the intermediate pipe section 18A could be provided with spacers 24 at the outset.

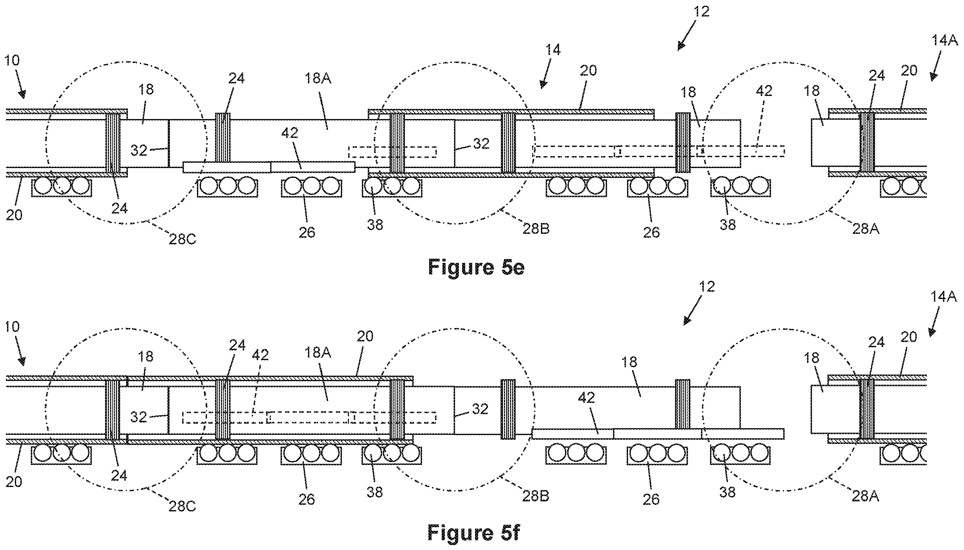

Next, as shown in Figure 5e, the outer pipe 20 of the pipe joint 14 is advanced in the downstream direction along and around the intermediate inner pipe 18A. The outer pipe 20 of the pipe joint 14 slides over the spacers 24 of the intermediate inner pipe 18A as the rails 42 supporting the intermediate inner pipe 18A are retracted, allowing the rollers 38 of the roller boxes 26 to support the advancing outer pipe 20. Figure 5f shows the outer pipe 20 of the pipe joint 14 now advanced fully along the intermediate inner pipe 18A into mutual abutment with the outer pipe 20 of the pipeline 10 at the third workstation 28C.

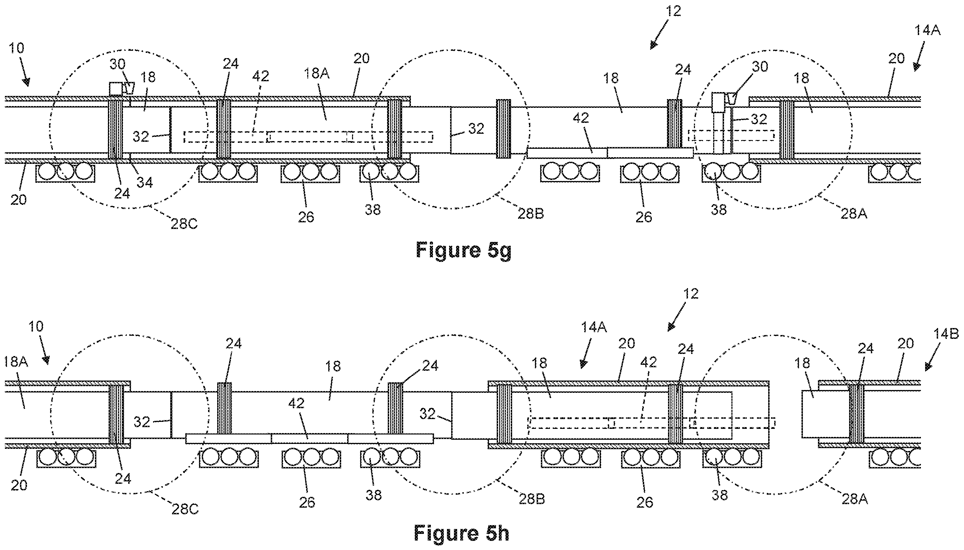

Figure 5g shows the additional pipe joint 14A brought into mutual abutment with the trailing end of the pipe joint 14 at the first workstation 28A. A first welding apparatus 30 is shown forming a circumferential butt weld 32 between the inner pipes 18 of the pipe joint 14 and of the additional pipe joint 14A. A second welding apparatus 30 shown at the third workstation 28C forms a circumferential butt weld 34 between the trailing end of the outer pipe of the pipeline 10 and the leading end of the outer pipe 20 of the pipe joint 14. These two welding operations may be performed simultaneously at the workstations 28A, 28C as shown in Figure 5g. However, in principle, either welding operation could be performed before the other, conveniently first at the third workstation 28C as soon as the outer pipe 20 of the pipe joint 14 has been advanced fully along the intermediate inner pipe 18A.

Thus extended, the pipeline 10 is advanced by the tensioners to bring the new trailing end of the pipeline 10 to the third workstation 28C as shown in Figure 5h. The leading and trailing ends of the inner pipe 18 of the pipe joint 14 are now in line with the third and second workstations 28C, 28B respectively. The outer pipe 20 of the additional pipe joint 14A can then be advanced along the inner pipe 18 of the pipe joint 14, as in Figures 5e and 5f, to be welded to the outer pipe 20 at the new trailing end of the pipeline 10 as in Figure 5g. Another PiP pipe joint 14B is shown in Figure 5h ready for its inner pipe 18 to be welded at the first workstation 28A as in Figure 5g. Similar steps are repeated until the pipeline 10 is complete.

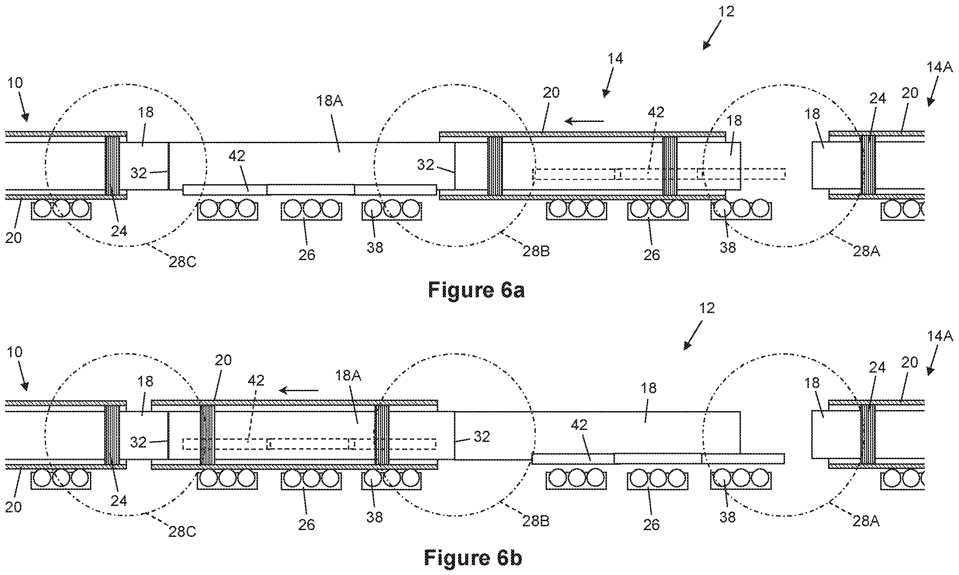

Figures 6a and 6b show another way of handling the spacers 26. In this example, the spacers 26 move with the outer pipe 20 of the pipe joint 14. Consequently, there is no need to place spacers 26 onto the intermediate inner pipe 18A before advancing the outer pipe 20 of the pipe joint 14 downstream. This arrangement could be adopted where there is no thermal insulation material preinstalled around the intermediate inner pipe 18A or the inner pipe 18 of the pipe joint.

In Figures 6a and 6b, welds 32 have already been formed between the inner pipe 18 of the pipeline 10 and the intermediate inner pipe 18A and between the intermediate inner pipe 18A and the inner pipe 18 of the pipe joint 14. The outer pipe 20 of the pipe joint 14 is shown being advanced downstream, together with its spacers 24, along and around the intermediate inner pipe 18A. The spacers 24 within the outer pipe 20 of the pipe joint 14 slide over the intermediate inner pipe 18A as the rails 42 supporting the intermediate inner pipe 18A are retracted, allowing the rollers 38 of the roller boxes 26 to support the advancing outer pipe 20. Conversely, the rails 42 of the upstream roller boxes 26 are deployed to support the inner pipe 18 of the pipe joint 14.

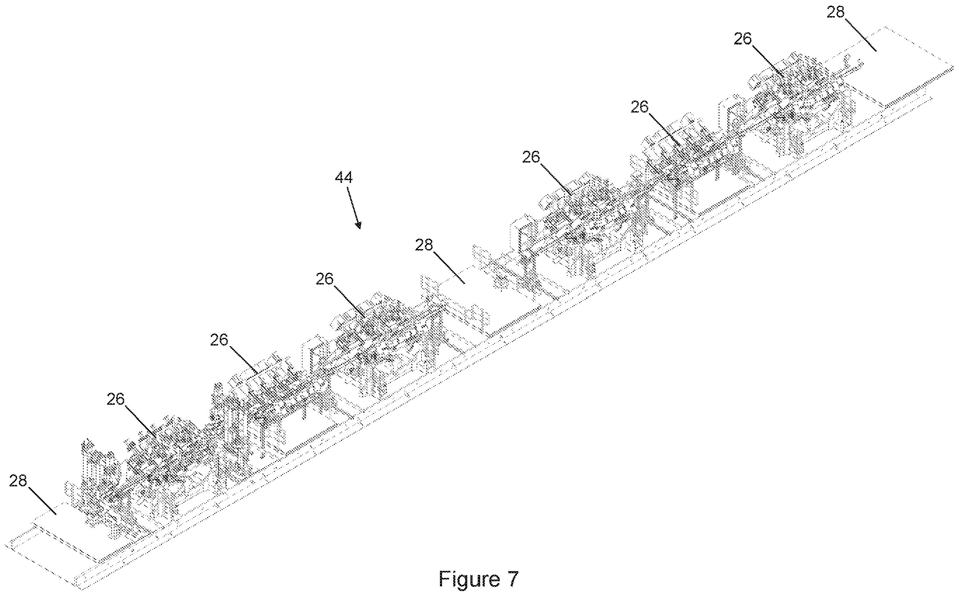

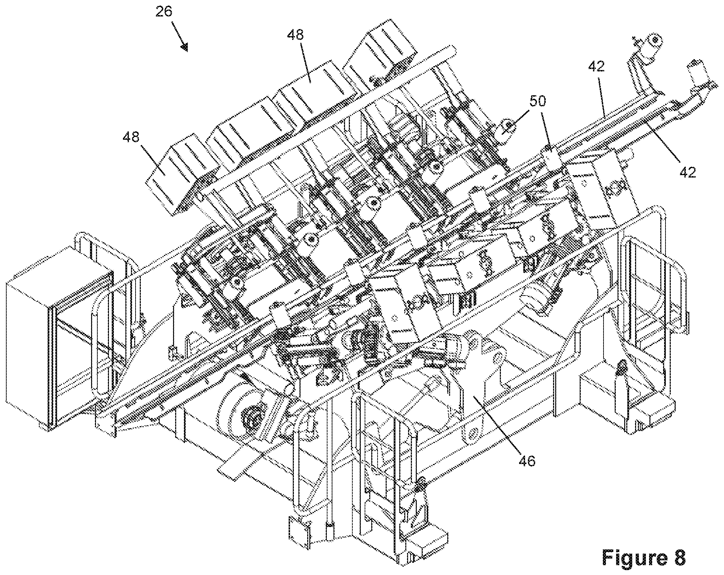

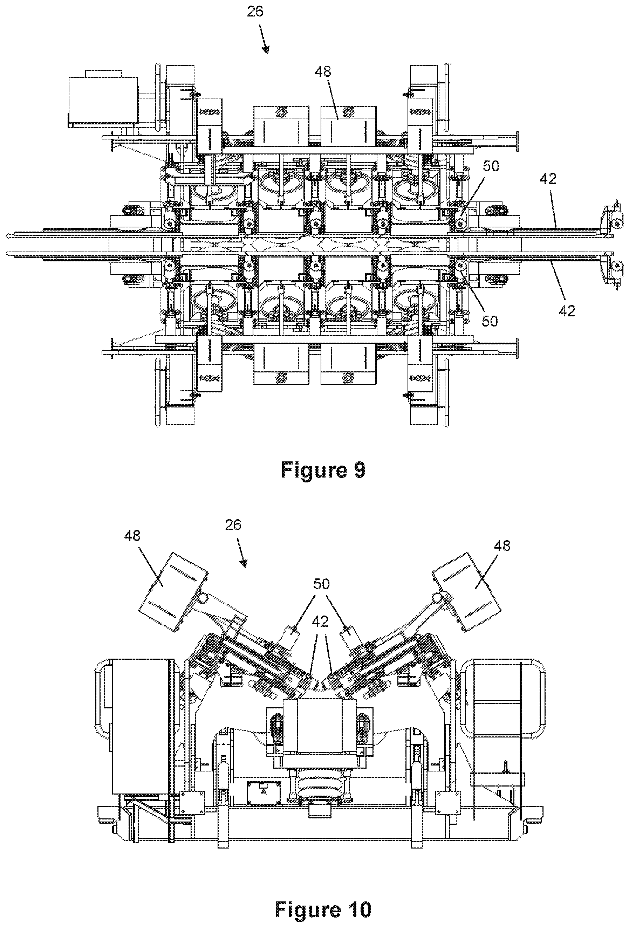

Figures 7 to 12 show a practical implementation of the invention. The S-lay firing line arrangement 44 of Figure 7 comprises two axially-aligned groups of three independently-operable roller boxes 26 of the invention, alternating with workstations 28 between the groups and at their ends. Figures 8 to 12 are enlarged views of one of the roller boxes 26 of that arrangement 44.

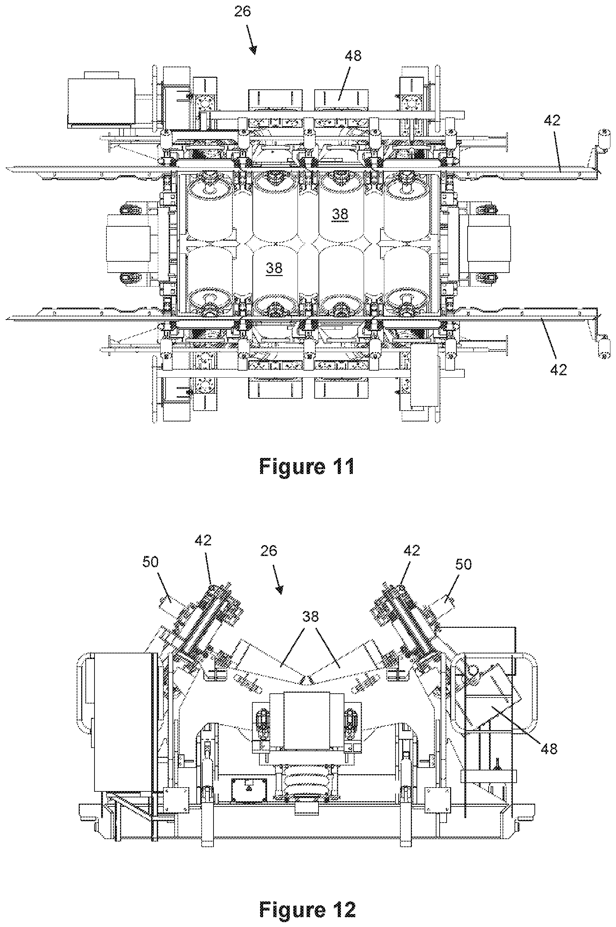

Figures 8, 9 and 10 show the roller box 26 in a first operating mode in which rails 42 are deployed to support the inner pipe 18 of a PiP assembly as described above. Conversely, Figures 11 and 12 show the roller box 26 in a second operating mode in which the rails 42 are retracted to allow rollers 38 beneath to support the outer pipe 20 of the PiP assembly. Driven by a tilt mechanism 46 and aided by counterweights 48, the rails 42 retract by swinging upwardly and outwardly into the raised, separated position shown in Figures 11 and 12.

As best seen in Figures 8, 9 and 10, arrays of guide rollers 50 cooperate with the rails 42 to define a path for the inner pipe 18. The guide rollers 50 overhang the rails 42, thus being positioned and oriented to prevent the inner pipe 18 from lifting away from the rails 42. This keeps the inner pipe 18 aligned with the central longitudinal axis 36 as illustrated in Figures 2 to 4c.

Many other variations are possible within the frame of the appended claims. For example, the inventive concept could, in principle, also be applied to manufacturing a PiP pipeline in another context, for example at a coastal spoolbase in support of reel-lay operations. Thus, in this specification, references to pipelines or PiP assemblies include pipe stalks that are fabricated from a succession of pipe joints and that are then welded together, in turn, to form longer pipelines. However, the invention is particularly beneficial in the space-constrained environment of an S-lay firing line.

## Claims

1. A method of assembling a pipe-in-pipe pipeline (10) by adding a succession of inner and outer pipe sections to a trailing end of the partially-completed pipeline (10), the method comprising:
welding a leading end of a first inner pipe section (18A) to a trailing end of an inner pipe (18) of the partially-completed pipeline (10);
advancing a leading end of a second inner pipe section (18) to a trailing end of the first inner pipe section (18A);
advancing an outer pipe section (20) downstream from the second inner pipe section (18) along and around the first inner pipe section (18A) and into abutment with a trailing end of an outer pipe (20) of the partially-completed pipeline (10); and
welding a leading end of the outer pipe section (20) to the trailing end of the outer pipe (20).

2. The method of Claim 1, comprising welding the leading end of the second inner pipe section (18) to the trailing end of the first inner pipe section (18A) before advancing the outer pipe section (20) onto the first inner pipe section (18A).

3. The method of Claim 2, comprising simultaneously welding the first inner pipe section (18A) to the inner pipe (18) of the partially-completed pipeline (10) and to the second inner pipe section (18).

4. The method of any preceding claim, comprising providing the outer pipe section (20) and the second inner pipe section (18) in concentric relation as a pipe-in-pipe pipe joint (14).

5. The method of any preceding claim, comprising supporting the advancing pipe sections (18, 18A, 20) when centred on a longitudinal axis (36) in common with that of the trailing end of the partially-completed pipeline (10).

6. The method of Claim 5, comprising deploying a secondary support system to support the first inner pipe section (18A) centred on said axis (36) while advancing and welding the first inner pipe section (18A) to the inner pipe (18).

7. The method of Claim 6, comprising retracting the secondary support system before advancing the outer pipe section (20), supported by a primary support system, around the first inner pipe section (18A).

8. A method of assembling a pipe-in-pipe pipeline (10) by adding inner and outer pipe sections to a trailing end of the partially-completed pipeline (10), the method comprising:
using a primary support system to support an outer pipe section (20) centred on a longitudinal axis (36) in common with the trailing end of the partially-completed pipeline (10);
deploying a secondary support system to support a first inner pipe section (18A) centred on said axis (36);
while supported by the deployed secondary support system, advancing and
welding the first inner pipe section (18A) to an inner pipe (18) of the partially-completed pipeline (10);
retracting the secondary support system; and
while supported by the primary support system, advancing the outer pipe (20) section around the first inner pipe section (18A) and welding the outer pipe section (20) to an outer pipe (20) of the partially-completed pipeline (10).

9. The method of Claim 8, wherein after the secondary support system has been retracted, the outer pipe section (20) supports the first inner pipe section (18A) centred on said axis (36).

10. The method of Claim 8 or Claim 9, further comprising redeploying the secondary support system behind the advanced outer pipe section (20) and supporting a second inner pipe section (18) on the deployed secondary support system, also centred on said axis (36).

11. The method of any of Claims 8 to 10, wherein the primary support system contacts the outer pipe section (20) at a first level and, when deployed, the secondary support system contacts the first inner pipe section (18A) at a second level above the first level.

12. The method of any of Claims 8 to 11, wherein retraction of the secondary support system away from the first inner pipe section (18A) provides access for the outer pipe section (20) to contact and be supported by the primary support system.

13. The method of any of Claims 8 to 12, comprising operating a longitudinal series of secondary support systems independently of each other for individual deployment and retraction in response to longitudinal movement of any of the pipe sections (18A, 20).

14. The method of any of Claims 1 to 7 or any of Claims 8 to 13, comprising advancing the outer pipe section (20) along at least a full length of the first inner pipe section (18A).

15. The method of any of Claims 1 to 7, any of Claims 8 to 13, or Claim 14, wherein:
the outer pipe section (20) is welded to the outer pipe (20) at a downstream workstation (28C); and
the second inner pipe section (18) is welded to the first inner pipe section (18A) at an upstream workstation (28A).

16. The method of Claim 15, wherein the first inner pipe section (18A) is welded to the inner pipe (18) at an intermediate workstation (28B).

17. The method of any of Claims 1 to 7, any of Claims 8 to 13, or any of Claims 14 to 16, comprising advancing the first inner pipe section (18A) when unsupported by the outer pipe section (20).

18. The method of any of Claims 1 to 7, any of Claims 8 to 13, or any of Claims 14 to 17, wherein the outer pipe section (20) supports the first inner pipe section (18A) via at least one spacer (24) in an annulus between those pipe sections.

19. The method of Claim 18, comprising mounting the or each spacer (24) to the first inner pipe section (18A) before advancing the outer pipe section (20) over the or each spacer (24).

20. The method of any of Claims 1 to 7, any of Claims 8 to 13, or any of Claims 14 to 18, comprising advancing the outer pipe section (20) as the or each spacer (24), disposed within and moving with the outer pipe section (20), slides over the first inner pipe section (18A).

21. The method of any of Claims 1 to 7, any of Claims 8 to 13, or any of Claims 14 to 20, when performed aboard a pipelaying vessel during an S-lay operation.

22. Apparatus for assembling a pipe-in-pipe pipeline (10), the apparatus comprising a primary support system for supporting an outer pipe section (20) and a secondary support system for supporting an inner pipe section (18A), wherein:
the primary support system is arranged to support the outer pipe section (20) centred on a longitudinal axis (36) in common with a trailing end of a partially-completed pipeline (10);
the secondary support system is deployable to support the inner pipe section (18A) also centred on said axis (36), to enable the inner pipe section (18A) to be advanced and welded to an inner pipe (18) of the partially-completed pipeline (10); and
the secondary support system is retractable to advance the outer pipe section (20) around the inner pipe section (18A) to enable the outer pipe section (20), when supported by the primary support system, to be welded to an outer pipe (20) of the partially-completed pipeline (10).

23. The apparatus of Claim 22, wherein the primary support system comprises at least one roller box (26) or support table.

24. The apparatus of Claim 22 or Claim 23, wherein the primary support system is configured to contact the outer pipe section (20) at a first level and the secondary support system is configured, when deployed, to contact the first inner pipe section (18A) at a second level above the first level.

25. The apparatus of any of Claims 22 to 24, wherein the secondary support system comprises laterally-displaceable support formations that, when deployed to respective inward positions, together define an axial path for guiding the advance of the inner pipe section (18A).

26. The apparatus of Claim 25, wherein the support formations are longitudinally-extending parallel rails (42).

27. The apparatus of any of Claims 22 to 26 and comprising a longitudinal series of secondary support systems, each of those systems being operable independently for individual deployment and retraction.

28. The apparatus of any of Claims 22 to 27, wherein the primary support system is retractable away from the common axis (36) to permit deployment of the secondary support system.

29. A pipelaying vessel configured for S-lay operation, comprising the apparatus of any of Claims 22 to 28.

## Patentansprüche

1. Verfahren zum Montieren einer Rohr-in-Rohr-Rohrleitung (10) durch Hinzufügen einer Folge von Innen- und Außenrohrabschnitten zu einem hinteren Ende der teilweise fertiggestellten Rohrleitung (10), wobei das Verfahren Folgendes umfasst:
Schweißen eines vorderen Endes eines ersten Innenrohrabschnitts (18A) an ein hinteres Ende eines Innenrohrs (18) der teilweise fertiggestellten Rohrleitung (10);
Vorrücken eines vorderen Endes eines zweiten Innenrohrabschnitts (18) zu einem hinteren Ende des ersten Innenrohrabschnitts (18A);
Vorrücken eines dem zweiten Innenrohrabschnitt (18) nachgelagerten Außenrohrabschnitts (20) entlang des ersten Innenrohrabschnitts (18A) und darum herum und bis zum Anstoßen an einem hinteren Ende eines Außenrohrs (20) der teilweise fertiggestellten Rohrleitung (10); und
Schweißen eines vorderen Endes des Außenrohrabschnitts (20) an das hintere Ende des Außenrohrs (20).

2. Verfahren nach Anspruch 1, umfassend das Schweißen des vorderen Endes des zweiten Innenrohrabschnitts (18) an das hintere Ende des ersten Innenrohrabschnitts (18A) vor dem Vorrücken des Außenrohrabschnitts (20) auf den ersten Innenrohrabschnitt (18A).

3. Verfahren nach Anspruch 2, umfassend das gleichzeitige Schweißen des ersten Innenrohrabschnitts (18A) an das Innenrohr (18) der teilweise fertiggestellten Rohrleitung (10) und an den zweiten Innenrohrabschnitt (18).

4. Verfahren nach einem der vorangehenden Ansprüche, umfassend das Bereitstellen des Außenrohrabschnitts (20) und des zweiten Innenrohrabschnitts (18) in konzentrischer Beziehung als Rohr-in-Rohr-Rohrverbindung (14).

5. Verfahren nach einem der vorangehenden Ansprüche, umfassend das Stützen der vorrückenden Rohrabschnitte (18, 18A, 20), wenn sie auf einer mit dem hinteren Ende der teilweise fertiggestellten Rohrleitung (10) gemeinen Längsachse (36) zentriert sind.

6. Verfahren nach Anspruch 5, umfassend das Ausfahren eines Sekundärstützsystems, um den auf der Achse (36) zentrierten ersten Innenrohrabschnitt (18A) zu stützen, während der erste Innenrohrabschnitt (18A) vorgerückt und an das Innenrohr (18) geschweißt wird.

7. Verfahren nach Anspruch 6, umfassend das Einziehen des Sekundärstützsystems vor dem Vorrücken des von einem Primärstützsystem gestützten Außenrohrabschnitts (20) um den ersten Innenrohrabschnitt (18A) herum.

8. Verfahren zum Montieren einer Rohr-in-Rohr-Rohrleitung (10) durch Hinzufügen von Innen- und Außenrohrabschnitten zu einem hinteren Ende der teilweise fertiggestellten Rohrleitung (10), wobei das Verfahren Folgendes umfasst:
Verwenden eines Primärstützsystems, um einen Außenrohrabschnitt (20) zu stützen, der auf einer mit dem hinteren Ende der teilweise fertiggestellten Rohrleitung (10) gemeinen Längsachse (36) zentriert ist,
Ausfahren eines Sekundärstützsystems, um einen auf der Achse (36) zentrierten ersten Innenrohrabschnitt (18A) zu stützen,
während er von dem ausgefahrenen Sekundärstützsystem gestützt wird, Vorrücken und Schweißen des ersten Innenrohrabschnitts (18A) an ein Innenrohr (18) der teilweise fertiggestellten Rohrleitung (10);
Einziehen des Sekundärstützsystems, und
während er von dem Primärstützsystem gestützt wird, Vorrücken des Außenrohrabschnitts (20) um den ersten Innenrohrabschnitt (18A) herum und Schweißen des Außenrohrabschnitts (20) an ein Außenrohr (20) der teilweise fertiggestellten Rohrleitung (10).

9. Verfahren nach Anspruch 8, wobei, nachdem das Sekundärstützsystem eingezogen wurde, der Außenrohrabschnitt (20) den ersten Innenrohrabschnitt (18A) auf der Achse (36) zentriert stützt.

10. Verfahren nach Anspruch 8 oder Anspruch 9, ferner umfassend das erneute Ausfahren des Sekundärstützsystems hinter dem vorgerückten Außenrohrabschnitt (20) und Stützen eines zweiten Innenrohrabschnitts (18) auf dem ausgefahrenen Sekundärstützsystem, ebenfalls auf der Achse (36) zentriert.

11. Verfahren nach einem der Ansprüche 8 bis 10, wobei sich das Primärstützsystem auf einer ersten Höhe mit dem Außenrohrabschnitt (20) in Kontakt befindet und sich das Sekundärstützsystem, wenn ausgefahren, auf einer zweiten Höhe über der ersten Höhe mit dem ersten Innenrohrabschnitt (18A) in Kontakt befindet.

12. Verfahren nach einem der Ansprüche 8 bis 11, wobei das Einziehen des Sekundärstützsystems von dem ersten Innenrohrabschnitt (18A) weg Zugang dafür bereitstellt, dass der Außenrohrabschnitt (20) mit dem Primärstützabschnitt in Kontakt kommt und davon gestützt wird.

13. Verfahren nach einem der Ansprüche 8 bis 12, umfassend das Betreiben einer längslaufenden Reihe von Sekundärstützsystemen unabhängig voneinander zum einzelnen Ausfahren und Einziehen als Reaktion auf eine Längsbewegung beliebiger der Rohrabschnitte (18A, 20).

14. Verfahren nach einem der Ansprüche 1 bis 7 oder einem der Ansprüche 8 bis 13, umfassend das Vorrücken des Außenrohrabschnitts (20) entlang mindestens einer ganzen Länge des ersten Innenrohrabschnitts (18A).

15. Verfahren nach einem der Ansprüche 1 bis 7, einem der Ansprüche 8 bis 13 oder Anspruch 14, wobei:
der Außenrohrabschnitt (20) an einer nachgelagerten Arbeitsstation (28C) an das Außenrohr (20) geschweißt wird, und
der zweite Innenrohrabschnitt (18) an einer vorgelagerten Arbeitsstation (28A) an den ersten Innenrohrabschnitt (28A) geschweißt wird.

16. Verfahren nach Anspruch 15, wobei der erste Innenrohrabschnitt (18A) an einer mittleren Arbeitsstation (28B) an das Innenrohr (18) geschweißt wird.

17. Verfahren nach einem der Ansprüche 1 bis 7, einem der Ansprüche 8 bis 13 oder einem der Ansprüche 14 bis 16, umfassend das Vorrücken des ersten Innenrohrabschnitts (18A), wenn er nicht von dem Außenrohrabschnitt (20) gestützt wird.

18. Verfahren nach einem der Ansprüche 1 bis 7, einem der Ansprüche 8 bis 13 oder einem der Ansprüche 14 bis 17, wobei der Außenrohrabschnitt (20) den ersten Innenrohrabschnitt (18A) mittels mindestens eines Abstandhalters (24) in einem Ringspalt zwischen diesen Rohrabschnitten stützt.

19. Verfahren nach Anspruch 18, umfassend das Anbringen des oder jedes Abstandhalters (24) an dem ersten Innenrohrabschnitt (18A) vor dem Vorrücken des Außenrohrabschnitts (20) über den oder jeden Abstandhalter (24).

20. Verfahren nach einem der Ansprüche 1 bis 7, einem der Ansprüche 8 bis 13 oder einem der Ansprüche 14 bis 18, umfassend das Vorrücken des Außenrohrabschnitts (20), während der oder jeder in dem Außenrohrabschnitt (20) angeordnete und sich damit bewegende Abstandhalter über den ersten Innenrohrabschnitt (18A) gleitet.

21. Verfahren nach einem der Ansprüche 1 bis 7, einem der Ansprüche 8 bis 13 oder einem der Ansprüche 14 bis 20, wenn an Bord eines Rohrverlegungsschiffs während eines S-Verlegungsbetriebs ausgeführt.

22. Vorrichtung zum Montieren einer Rohr-in-Rohr-Rohrleitung (10), wobei die Vorrichtung ein Primärstützsystem zum Stützen eines Außenrohrabschnitts (20) und ein Sekundärstützsystem zum Stützen eines Innenrohrabschnitts (18A) umfasst, wobei:
das Primärstützsystem dazu angeordnet ist, den Außenrohrabschnitt (20) zu stützen, der auf einer mit einem hinteren Ende einer teilweise fertiggestellten Rohrleitung (10) gemeinen Längsachse (36) zentriert ist,
das Sekundärstützsystem ausfahrbar ist, um den ebenfalls auf der Achse (36) zentrierten Innenrohrabschnitt (18A) zu stützen, um zu ermöglichen, dass der Innenrohrabschnitt (18A) vorgerückt und an ein Innenrohr (18) der teilweise fertiggestellten Rohrleitung (10) geschweißt wird, und
das Sekundärstützsystem einziehbar ist, um den Außenrohrabschnitt (20) um den Innenrohrabschnitt (18A) herum vorzurücken, um zu ermöglichen, dass der Außenrohrabschnitt (20), wenn er von dem Primärstützsystem gestützt wird, an ein Außenrohr (20) der teilweise fertiggestellten Rohrleitung (10) geschweißt wird.

23. Vorrichtung nach Anspruch 22, wobei das Primärstützsystem mindestens einen Rollenkasten (26) oder Stütztisch umfasst.

24. Vorrichtung nach Anspruch 22 oder Anspruch 23, wobei das Primärstützsystem dazu konfiguriert ist, sich auf einer ersten Höhe mit dem Außenrohrabschnitt (20) in Kontakt zu befinden, und das Sekundärstützsystem dazu konfiguriert ist, wenn ausgefahren, sich auf einer zweiten Höhe über der ersten Höhe mit dem ersten Innenrohrabschnitt (18A) in Kontakt zu befinden.

25. Vorrichtung nach einem der Ansprüche 22 bis 24, wobei das Sekundärstützsystem seitlich verschiebbare Stützgebilde umfasst, die wenn in jeweilige innere liegende Stellungen ausgefahren, zusammen eine axiale Bahn zum Führen des Vorrückens des Innenrohrabschnitts (18A) definieren.

26. Vorrichtung nach Anspruch 25, wobei die Stützgebilde sich in Längsrichtung erstreckende parallele Schienen (42) sind.

27. Vorrichtung nach einem der Ansprüche 22 bis 26 und umfassend eine längslaufende Reihe von Sekundärstützsystemen, wobei jedes dieser Systeme zum einzelnen Ausfahren und Einziehen unabhängig betreibbar ist.

28. Vorrichtung nach einem der Ansprüche 22 bis 27, wobei das Primärstützsystem von der gemeinsamen Achse (36) weg einziehbar ist, um das Ausfahren des Sekundärstützsystems zu ermöglichen.

29. Rohrverlegungsschiff, das zum S-Verlegungsbetrieb konfiguriert ist, umfassend die Vorrichtung nach einem der Ansprüche 22 bis 28.

## Revendications

1. Procédé d'assemblage d'une canalisation à double enveloppe (10) par l'ajout d'une série de sections de conduite intérieures et extérieure à une extrémité arrière de la canalisation (10) partiellement formée, le procédé comprenant :
le soudage d'une extrémité avant d'une première section de conduite intérieure (18A) à une extrémité arrière d'une conduite intérieure (18) de la canalisation (10) partiellement formée ;
le déplacement en avant d'une extrémité avant d'une seconde section de conduite intérieure (18) jusqu'à une extrémité arrière de la première section de conduite intérieure (18A) ;
le déplacement en avant d'une section de conduite extérieure (20) en sens aval depuis la seconde section de conduite intérieure (18) le long et autour de la première section de conduite intérieure (18A) et son accolement à une extrémité arrière d'une conduite extérieure (20) de la canalisation (10) partiellement formée ; et
le soudage d'une extrémité avant de la section de conduite extérieure (20) à l'extrémité arrière de la conduite extérieure (20).

2. Procédé selon la revendication 1, comprenant le soudage de l'extrémité avant de la seconde section de conduite intérieure (18) à l'extrémité arrière de la première section de conduite intérieure (18A) avant le déplacement en avant de la section de conduite extérieure (20) sur la première section de conduite intérieure (18A).

3. Procédé selon la revendication 2, comprenant le soudage simultané de la première section de conduite intérieure (18A) à la conduite intérieure (18) de la canalisation (10) partiellement formée et à la seconde section de conduite intérieure (18).

4. Procédé selon l'une quelconque des revendications précédentes, comprenant la mise en oeuvre de la section de conduite extérieure (20) et de la seconde section de conduite intérieure (18) en relation concentrique sous la forme d'un raccord de conduites à double enveloppe (14).

5. Procédé selon l'une quelconque des revendications précédentes, comprenant le soutien des sections de conduite déplacées en avant (18, 18A, 20) lorsque celles-ci sont centrées sur un axe longitudinal (36) coïncidant avec celui de l'extrémité arrière de la canalisation (10) partiellement formée.

6. Procédé selon la revendication 5, comprenant le déploiement d'un système de soutien secondaire pour soutenir la première section de conduite intérieure (18A) centrée sur ledit axe (36) durant le déplacement en avant de la première section de conduite intérieure (18A) jusqu'à la conduite intérieure (18) et son soudage à celle-ci.

7. Procédé selon la revendication 6, comprenant la rétraction du système de soutien secondaire avant le déplacement en avant de la section de conduite extérieure (20), soutenue par un système de soutien principal, autour de la première section de conduite intérieure (18A).

8. Procédé d'assemblage d'une canalisation à double enveloppe (10) par l'ajout de sections de conduite intérieures et extérieure à une extrémité arrière de la canalisation (10) partiellement formée, le procédé comprenant :
l'utilisation d'un système de soutien principal pour soutenir une section de conduite extérieure (20) centrée sur un axe longitudinal (36) partagé avec l'extrémité arrière de la canalisation (10) partiellement formée ;
le déploiement d'un système de soutien secondaire pour soutenir une première section de conduite intérieure (18A) centrée sur ledit axe (36) ;
tandis qu'elle est soutenue par le système de soutien secondaire déployé, le déplacement en avant de la première section de conduite intérieure (18A) jusqu'à une conduite intérieure (18) de la canalisation (10) partiellement formée et son soudage à celle-ci ;
la rétraction du système de soutien secondaire ; et
tandis qu'elle est soutenue par le système de soutien principal, le déplacement en avant de la section de conduite extérieure (20) autour de la première section de conduite intérieure (18A) et le soudage de la section de conduite extérieure (20) à une conduite extérieure (20) de la canalisation (10) partiellement formée.

9. Procédé selon la revendication 8, dans lequel, après la rétraction du système de soutien secondaire, la section de conduite extérieure (20) soutient la première section de conduite intérieure (18A) centrée sur ledit axe (36).

10. Procédé selon la revendication 8 ou la revendication 9, comprenant, en outre, le redéploiement du système de soutien secondaire derrière la section de conduite extérieure (20) déplacée en avant et le soutien d'une seconde section de conduite intérieure (18) sur le système de soutien secondaire déployé, également centrée sur ledit axe (36).

11. Procédé selon l'une quelconque des revendications 8 à 10, dans lequel le système de soutien principal entre en contact avec la section de conduite extérieure (20) à un premier niveau et, lorsqu'il est déployé, le système de soutien secondaire entre en contact avec la première section de conduite intérieure (18A) à un second niveau au-dessus du premier niveau.

12. Procédé selon l'une quelconque des revendications 8 à 11, dans lequel la rétraction du système de soutien secondaire de façon à l'éloigner de la première section de conduite intérieure (18A) donne accès pour que la section de conduite extérieure (20) entre en contact avec le système de soutien principal et soit soutenue par celui-ci.

13. Procédé selon l'une quelconque des revendications 8 à 12, comprenant l'actionnement d'une série longitudinale de systèmes de soutien secondaires indépendamment les uns des autres pour un déploiement et une rétraction individuels en réponse à un déplacement longitudinal de l'une quelconque des sections de conduite (18A, 20).

14. Procédé selon l'une quelconque des revendications 1 à 7 ou l'une quelconque des revendications 8 à 13, comprenant le déplacement en avant de la section de conduite extérieure (20) le long au moins d'une longueur entière de la première section de conduite intérieure (18A).

15. Procédé selon l'une quelconque des revendications 1 à 7, l'une quelconque des revendications 8 à 13 ou la revendication 14, dans lequel :
la section de conduite extérieure (20) est soudée à la conduite extérieure (20) au niveau d'un poste de traitement en aval (28C) ; et
la seconde section de conduite intérieure (18) est soudée à la première section de conduite intérieure (18A) au niveau d'un poste de traitement en amont (28A).

16. Procédé selon la revendication 15, dans lequel la première section de conduite intérieure (18A) est soudée à la conduite intérieure (18) au niveau d'un poste de traitement intermédiaire (28B).

17. Procédé selon l'une quelconque des revendications 1 à 7, l'une quelconque des revendications 8 à 13 ou l'une quelconque des revendications 14 à 16, comprenant le déplacement en avant de la première section de conduite intérieure (18A) lorsqu'elle n'est pas soutenue par la section de conduite extérieure (20).

18. Procédé selon l'une quelconque des revendications 1 à 7, l'une quelconque des revendications 8 à 13 ou l'une quelconque des revendications 14 à 17, dans lequel la section de conduite extérieure (20) soutient la première section de conduite intérieure (18A) par le biais d'au moins une entretoise (24) dans un espace annulaire entre ces sections de conduite.

19. Procédé selon la revendication 18, comprenant l'installation de l'entretoise ou de chaque entretoise (24) sur la première section de conduite intérieure (18A) avant le déplacement en avant de la section de conduite extérieure (20) sur l'entretoise ou chaque entretoise (24).

20. Procédé selon l'une quelconque des revendications 1 à 7, l'une quelconque des revendications 8 à 13 ou l'une quelconque des revendications 14 à 18, comprenant le déplacement en avant de la section de conduite extérieure (20) tandis que l'entretoise ou chaque entretoise (24), disposée à l'intérieur de la section de conduite extérieure (20) et se déplaçant avec celle-ci, glisse sur la première section de conduite intérieure (18A).

21. Procédé selon l'une quelconque des revendications 1 à 7, l'une quelconque des revendications 8 à 13 ou l'une quelconque des revendications 14 à 20, lorsqu'il est exécuté à bord d'un navire de pose de conduites au cours d'une opération de pose en S.

22. Appareil pour l'assemblage d'une canalisation à double enveloppe (10), l'appareil comprenant un système de soutien principal destiné à soutenir une section de conduite extérieure (20) et un système de soutien secondaire destiné à soutenir une section de conduite intérieure (18A), dans lequel :
le système de soutien principal est conçu pour soutenir la section de conduite extérieure (20) centrée sur un axe longitudinal (36) partagé avec une extrémité arrière d'une canalisation (10) partiellement formée ;
le système de soutien secondaire est déployable pour soutenir la section de conduite intérieure (18A) également centrée sur ledit axe (36), afin de permettre le déplacement en avant de la section de conduite intérieure (18A) jusqu'à une conduite intérieure (18) de la canalisation (10) partiellement formée et son soudage à celle-ci ; et
le système de soutien secondaire est rétractable pour déplacer en avant la section de conduite extérieure (20) autour de la section de conduite intérieure (18A) afin de permettre le soudage de la section de conduite extérieure (20), lorsqu'elle est soutenue par le système de soutien principal, à une conduite extérieure (20) de la canalisation (10) partiellement formée.

23. Appareil selon la revendication 22, dans lequel le système de soutien principal comprend au moins une boîte à rouleaux (26) ou une table de support.

24. Appareil selon la revendication 22 ou la revendication 23, dans lequel le système de soutien principal est conçu pour entrer en contact avec la section de conduite extérieure (20) à un premier niveau et le système de soutien secondaire est conçu, lorsqu'il est déployé, pour entrer en contact avec la première section de conduite intérieure (18A) à un second niveau au-dessus du premier niveau.

25. Appareil selon l'une quelconque des revendications 22 à 24, dans lequel le système de soutien secondaire comprend des structures de soutien déplaçables latéralement qui, lorsqu'elles sont déployées jusqu'à des positions vers l'intérieur respectives, définissent conjointement un chemin axial pour le guidage du déplacement en avant de la section de conduite intérieure (18A).

26. Appareil selon la revendication 25, dans lequel les structures de soutien sont des rails parallèles (42) s'étendant longitudinalement.

27. Appareil selon l'une quelconque des revendications 22 à 26 et comprenant une série longitudinale de systèmes de soutien secondaires, chacun de ces systèmes étant actionnable indépendamment pour un déploiement et une rétraction individuels.

28. Appareil selon l'une quelconque des revendications 22 à 27, dans lequel le système de soutien principal est rétractable de façon à l'éloigner de l'axe commun (36) afin de permettre le déploiement du système de soutien secondaire.

29. Navire de pose de conduites conçu pour des opérations de pose en S, comprenant l'appareil selon l'une quelconque des revendications 22 à 28.
